# EUROPEAN PATENT SPECIFICATION

(11) **EP 1 266 916 B1**
(45) Date of publication and mention of the grant of the patent: **14.12.2005**
(21) Application number: 00952839.9
(22) Date of filing: 10.08.2000
(51) Int. Cl.: C08F 297/04

(54) **MULTIBLOCK COPOLYMER AND THE PREPARING METHOD THEREOF**
MULTIBLOCKCOPOLYMER UND SEIN HERSTELLUNGSVERFAHREN
COPOLYMERE MULTISEQUENCE ET SON PROCEDE DE PREPARATION

(30) Priority: 17.02.2000 CN 00100848; 17.02.2000 CN 00100850; 17.02.2000 CN 00100849; 17.02.2000 CN 00100846; 17.02.2000 CN 00100847
(43) Date of publication of application: 18.12.2002
(73) Proprietor: China Petroleum & Chemical Corporation, Beijing 100029 (CN); Research Institute of Beijing Yanshan Petrochemical Co., Ltd., Fangshan District, Beijing 102500 (CN)
(72) Inventor: LI, Yang, Fangshan District Beijing 102500 (CN); HONG, Dingyi, Chaoyang District Beijing 100029 (CN); GU, Mingchu, Dalian City Liaoning 116012 (CN); YANG, Jinzong, Dalian City Liaoning 116012 (CN); WANG, Yurong, Dalian City Liaoning 116012 (CN); XU, Hongde, Fangshan District Beijing 102500 (CN); LU, Xingjun, Fangshan District Beijing 102500 (CN); YANG, Li, Fangshan District Beijing 102500 (CN); DING, Jian, Fangshan District Beijing 102500 (CN); LV, Zhanxia, Fangshan District Beijing 102500 (CN); LU, Yonjun, Chaoyang District Beijing 100012 (CN); SONG, Yuchun, Fangshan District Beijing 102500 (CN)
(74) Representative: Hubert, Philippe
(86) International application number: PCT/CN2000/000228
(87) International publication number: WO 2001/060879

(56) References cited:
- EP-A- 0 413 294
- US-A- 4 104 331
- US-A- 4 782 149
- US-A- 5 462 994
- US-A- 5 583 182
- US-A- 5 736 612
- DATABASE WPI Section Ch, Week 200024 Derwent Publications Ltd., London, GB; Class A12, AN 2000-272047 XP002268198 & CN 1 242 381 A (CHINA PETRO-CHEM CORP), 26 January 2000 (2000-01-26) & EP 1 211 272 A 5 June 2002 (2002-06-05)
- DATABASE WPI Section Ch, Week 200024 Derwent Publications Ltd., London, GB; Class A12, AN 2000-272046 XP002268199 & CN 1 242 380 A (CHINA PETRO-CHEM CORP), 26 January 2000 (2000-01-26) & EP 1 211 272 A 5 June 2002 (2002-06-05)
- DATABASE WPI Section Ch, Week 200024 Derwent Publications Ltd., London, GB; Class A12, AN 2000-272048 XP002268200 & CN 1 242 382 A (YANSHAN PETROCHEMICAL INST YANSHAN), 26 January 2000 (2000-01-26)
- DATABASE WPI Section Ch, Week 200027 Derwent Publications Ltd., London, GB; Class A12, AN 2000-304269 XP002268201 & CN 1 244 541 A (INST YANSHAN PETROCHEMICAL CO BEIJING), 16 February 2000 (2000-02-16)
- DATABASE WPI Section Ch, Week 200323 Derwent Publications Ltd., London, GB; Class A12, AN 2003-230204 XP002268202 & CN 1 153 183 A (INST YANSHAN PETRO CHEM CO BEIJING), 2 July 1997 (1997-07-02)

## Description

The present invention relates to multiblock interpolymers of conjugated diene and monovinyl aromatic monomer and processes for the preparation thereof. More particularly, the present invention relates to multiblock interpolymers having the following symmetric structures:

Y-X-Y

wherein Y represents a block of a random copolymer of conjugated diene and monovinyl aromatic monomer; and
X represents a block of butadiene homopolymer, a block of isoprene homopolymer, or a block of butadiene/isoprene copolymer.

Generally, representative block interpolymers based on butadiene, isoprene and styrene are SBS and SIS, wherein SBS is butadiene/styrene triblock copolymers (wherein B represents polybutadiene block and S represents polystyrene block), and SIS is isoprene/styrene triblock copolymers(wherein I represents polyisoprene block and S represents polystyrene block). By employing difunctional lithium based initiators and changing the charging orders of butadiene, isoprene and styrene, block interpolymers having various different structures can be obtained. Such block interpolymers comprise those having the following symmetric structures: (1) S-I-B-I-S (wherein butadiene, isoprene and styrene are charged sequentially); (2) S-B-I-B-S (wherein isoprene, butadiene and styrene are charged sequentially); (3) S-I-BI-B-BI-I-S (wherein butadiene and isoprene are charged simultaneously at first, and then styrene is charged); (4) S-BS-B-I-B-BS-S (wherein isoprene is charged at first, and then butadiene and styrene are charged simultaneously); (5) S-IS-I-B-I-IS-S (wherein butadiene is charged at first, and then isoprene and styrene are charged simultaneously); (6) S-IS-I-BI-I-BI-I-IS-S (wherein butadiene, isoprene and styrene are charged simultaneously), in the above formula, S represents a polystyrene block, B represents a polybutadiene block, I represents a polyisoprene bock, BI represents a block of tapered copolymer of butadiene and isoprene, BS represents a block of tapered copolymer of butadiene and styrene, and IS represents a block of tapered copolymer of isoprene and styrene.

For example, CN1242381A discloses an isoprene/butadiene/styrene heptablock copolymer having a symmetrical structure: S-BS-B-I-B-BS-S; CN1242380A discloses a butadiene/ isoprene/styrene heptablock copolymer having a symmetrical structure: S-IS-I-BI-B-BI-I-IS-S; CN1242382A discloses a butadiene/ isoprene/styrene nonablock copolymer having a symmetrical structure: S-IS-I-BI-B-BI-I-IS-S; CN1244541A and its parent application CN1153183A disclose a butadiene/isoprene/styrene block copolymer having three symmetrical structures: (1) S-B-I-B-S, (2) S-I-B-I-S and (3) S-B/I-S, these publications have the same applicant as the pending application. Further EP-A-1211272, claiming the priority of the above publications CN1242381A and CN1242380A, discloses an isoprene/butadiene/monovinyl aromatic monomer heptablock copolymer having a symmetrical structure: Z-XZ-X-Y-X-XZ-Z, wherein Z represents a polymer block of monovinyl aromatic monomer, X and Y, being different from each other, represent polymer blocks of butadiene or isoprene, and XZ represents a tapered copolymer block of monovinyl aromatic monomer and butadiene or isoprene; and EP-A-0413294 discloses a block copolymer having a structure of A-B-B'-X-(B'-B-A), wherein B represents isoprene blocks, B' represents butadiene blocks and A represents blocks of a nonelastomeric monomer.

The object of the present invention is to provide novel multiblock interpolymers of conjugated diene and monovinyl aromatic monomer, which have in the same molecule both a rubber block of random copolymer of conjugated diene and monovinyl aromatic monomer and a rubber block selected from blocks of butadiene homopolymer, isoprene homopolymer and butadiene/isoprene copolymer, and hence possess excellent properties of the both two kinds of rubbers, and can be used widely as integrated rubber materials.

Another object of the present invention is to provide processes for the preparation of the novel multiblock interpolymers, it can prepare the above integrated rubber material in situ in a single reactor instead of physically blending.

Therefore, in one aspect the present invention relates to multiblock interpolymers having the following symmetric structures:

Y-X-Y

wherein Y represents a block of random copolymer of conjugated diene and monovinyl aromatic monomer; and
X represents a block of butadiene homopolymer, a block of isoprene homopolymer, or a block of butadiene/isoprene copolymer.

In another aspect, the present invention relates to processes for the preparation of the present multiblock interpolymers by anionic polymerization.

In still another aspect, the present invention relates to use of the present multiblock interpolymers as elastomeric materials.

The follows will describe the present invention in detail.

In the present multiblock interpolymers, block X is a block of butadiene homopolymer, a block of isoprene homopolymer, or a block of butadiene/isoprene copolymer. Preferably, block X is a block having the following structure:

-B-

or

-I-

or

-I-B-I-

or

-B-I-B-

or

-I-BI-B-BI-I-,

wherein B represents a block of butadiene homopolymer, I represents a block of isoprene homopolymer, and BI represents a block of tapered copolymer of butadiene and isoprene.

Accordingly, the present multiblock interpolymers preferably are of the fillowing structure;

Y-B-Y

or

Y-I-Y

or

Y-I-B-I-Y

or

Y-B-I-B-Y

or

Y-I-BI-B-BI-I-Y.

In block X, the content of 1,2-addition polymerization structure of the butadiene is preferably in the range of from 6 to 35 percent by weight, more preferably from 10 to 20 percent by weight, based on the total weight of the units derived from the butadiene in block X, and the content of 3,4-addition polymerization structure of isoprene is in the range of from 6 to 35 percent by weight, more preferably from 10 to 20 percent by weight, based on the total weight of the units derived from the isoprene in block X. When block X is a block of butadienelisoprene copolymer, for example, when block X is -I-B-I-, -B-I-B- or -I-BI-B-BI-I-, the weight ratio of butadiene to isoprene is preferably from 10/90 to 90/10, more preferably from 30/70 to 70/30.

In the present multiblock interpolymers, block Y is a block of random copolymer of conjugated diene and monovinyl aromatic monomer. Suitable monomers are any conjugated diene and monovinyl aromatic monomer from which the random copolymer rubber block can be obtained. The conjugated diene monomer is preferably a C₄-C₆ conjugated diene, scuh as butadiene, isoprene, 1,3-pentadiene, 1,3-hexadiene, 2,3-dimethylbutadiene, and mixtures thereof, more preferably butadiene and isoprene, most preferably butadiene. The monovinyl aromatic monomer which is preferred in block Y includes styrene or alkyl substituted styrene such as vinyl toluene(all isomers), α-methylstyrene, 4-tertiary-butylstyrene, 4-methylstyrene, 3, 5-diethylstyrene, 3, 5-di-n-butylstyrene, 4-n-propylstyrene, 4-dodecylstyrene and mixtures thereof. More preferably, the monovinyl aromatic monomer is styrene, vinyltoluene, α-methylstyrene and mixtures thereof, with styrene being most preferred. In block Y, the content of the recurring unit derived from the monovinyl aromatic monomer is generally 10 to 50 percent by weight, preferably 15 to 35 percent by weight, based on the total weight of block Y; and correspondingly, the content of the recurring unit derived from the conjugated diene is generally 50 to 90 percent by weight, preferably 65 to 85 percent by weight. In block Y, the content of 1,2- or 3,4-addition polymerization structure for the polymerized conjugated dienes is preferably 6 to 80 percent by weight, more preferably 10 to 50 percent by weight, based on the total weight of the units derived from the conjugated diene in block Y.

In the present multiblock interpolymers, the weight ratio of the total blocks Y to block X is preferably 10/90 to 90/10, more preferably 30/70 to 70/30.

Preferably, the present multiblock interpolymers have a number average molecular weight (Mn), determined by Gel Permeation Chromatography (GPC) method) of 5×10⁴ to 35×10⁴, and most preferably 10×10⁴ to 25×10⁴.

The present multiblock interpolymers can be prepared by anionic polymerization process under conventional conditions. In one preferred embodiment, the preparation process thereof comprises the steps of
a) anionic polymerizing butadiene and/or isoprene in a non-polar hydrocarbon solvent in presence of a difunctional lithium based initiator, till the butadiene and/or isoprene are polymerized completely, to form block X; and then
b) charging a mixture of conjugated diene and monovinyl aromatic monomer into the reaction mixture obtained in step a) above, continuing the anionic polymerization in presence of a polar modifier till the polymerization is complete, to form block Y.

Depending on the specific structure of block X, step a) of the present process can particularly be: (1) when block X is -B-, butadiene is polymerized in step a); (2) when block X is -I-, isoprene is polymerized in step a); (3) when block X is -I-B-I-, in step a) butadiene is first polymerized completely, and then isoprene is charged and polymerized completely; (4) when block X is -B-I-B-, in step a) isoprene is first polymerized completely, and then butadiene is charged and polymerized completely; (5) when block X is -I-BI-B-BI-I-, in step a) a mixture of butadiene and isoprene is charged to a non-polar hydrocarbon solvent and polymerized completely.

More particularly, the multiblock interpolymer Y-B-Y of the present invention can be prepared as follows. Butadiene, in an amount to provide the desired composition of the final interpolymer, is charged to a non-polar hydrocarbon solvent in a reactor, optionally a polar modifier is charged depending upon the desired microstructure of polybutadiene, and the kind and amount of the polar modifier is dependent on the desired content of 1,2-addition polymerization structure in the polybutadiene block -B-. The monomer concentration is 10 to 20 percent by weight. After the initialization temperature, which is generally about 30 to 80 °C, is reached, a difunctional lithium based initiator is charged in an amount to provide the desired molecular weight of the interpolymer. The difunctional lithium based initiator can be a single difunctional lithium based initiator or a mixture of several difunctional lithium based initiators, and generally is at least one selected from the group consisting of bislithiums derived from dihalogenated alkanes and oligomeric bislithiums thereof, bislithiums of naphthalene, and bislithiums derived from diene compounds and oligomeric bislithiums thereof. After the butadiene is polymerized completely, a mixture of conjugated diene and monovinyl aromatic monomer containing a polar modifier is charged to the reactor to prepare block Y, the conjugated diene and the monovinyl aromatic monomer are used in such amounts to provide the desired weight ratio of the conjugated diene to the monovinyl aromatic monomer in block Y. The object of use of the polar modifier is to adjust the copolymerization reactivity ratio of the conjugated diene to the monovinyl aromatic monomer, achieve the random copolymerization of the conjugated diene and the monovinyl aromatic monomer, and obtain the random copolymer block Y. The polar modifier shall be used in an amount sufficiently to make the conjugated diene and the monovinyl aromatic monomer copolymerize randomly, and the amount of the polar modifier used can be varied within a wide range depending upon the kind of the polar modifier employed. After the conjugated diene and the monovinyl aromatic monomer are polymerized completely, the polymerization is terminated and the resulted polymer product is recovered in conventional ways.

More particularly, the multiblock interpolymer Y-I-Y of the present invention can be prepared as follows. Isoprene, in an amount to provide the desired composition of the final interpolymer, is charged to a non-polar hydrocarbon solvent in a reactor, optionally a polar modifier is charged depending upon the desired microstructure of polyisoprene, and the kind and amount of the polar modifier is dependent on the desired content of 3,4-addition polymerization structure in the polyisoprene block -I-. The monomer concentration is 10 to 20 percent by weight. After the initialization temperature, which is generally about 30 to 80 °C, is reached, a difunctional lithium based initiator is charged in an amount to provide the desired molecular weight of the interpolymer. The difunctional lithium based initiator can be a single difunctional lithium based initiator or a mixture of several difunctional lithium based initiators, and generally is at least one selected from the group consisting of bislithiums derived from dihalogenated alkanes and oligomeric bislithiums thereof, bislithiums of naphthalene, and bislithiums derived from diene compounds and oligomeric bislithiums thereof. After the isoprene is polymerized completely, a mixture of conjugated diene and monovinyl aromatic monomer containing a polar modifier is charged to the reactor to prepare block Y, the conjugated diene and the monovinyl aromatic monomer are used in such amounts to provide the desired weight ratio of the conjugated diene to the monovinyl aromatic monomer in block Y. The object of use of the polar modifier is to adjust the copolymerization reactivity ratio of the conjugated diene to the monovinyl aromatic monomer, achieve the random copolymerization of the conjugated diene and the monovinyl aromatic monomer, and obtain the random copolymer block Y. The polar modifier shall be used in an amount sufficiently to make the conjugated diene and the monovinyl aromatic monomer copolymerize randomly, and the amount of the polar modifier used can be varied within a wide range depending upon the kind of the polar modifier employed. After the conjugated diene and the monovinyl aromatic monomer are polymerized completely, the polymerization is terminated and the resulted polymer product is recovered in conventional ways.

More particularly, the multiblock interpolymer Y-I-B-I-Y of the present invention can be prepared as follows. Butadiene, in an amount to provide the desired composition of the final interpolymer, is charged to a non-polar hydrocarbon solvent in a reactor, optionally a polar modifier is charged depending upon the desired microstructure of polybutadiene, and the kind and amount of the polar modifier is dependent on the desired content of 1,2-addition polymerization structure in the polybutadiene block -B-. The monomer concentration is 10 to 20 percent by weight. After the initialization temperature, which is generally about 30 to 80 °C, is reached, a difunctional lithium based initiator is charged, in an amount to provide the desired molecular weight of the interpolymer, to prepare block -B-. The difunctional lithium based initiator can be a single difunctional lithium based initiator or a mixture of several difunctional lithium based initiators, and generally is at least one selected from the group consisting of bislithiums derived from dihalogenated alkanes and oligomeric bislithiums thereof, bislithiums of naphthalene, and bislithiums derived from diene compounds and oligomeric bislithiums thereof. After complete polymerization of the butadiene, isoprene in suitable amount is charged to prepare block -I-. After the isoprene is polymerized completely, a mixture of conjugated diene and monovinyl aromatic monomer containing a polar modifier is charged to the reactor to prepare block Y, the conjugated diene and the monovinyl aromatic monomer are used in such amounts to provide the desired weight ratio of the conjugated diene to the monovinyl aromatic monomer in block Y. The object of use of the polar modifier is to adjust the copolymerization reactivity ratio of the conjugated diene to the monovinyl aromatic monomer, achieve the random copolymerization of the conjugated diene and the monovinyl aromatic monomer, and obtain the random copolymer block Y. The polar modifier shall be used in an amount sufficiently to make the conjugated diene and the monovinyl aromatic monomer copolymerize randomly, and the amount of the polar modifier used can be varied within a wide range depending upon the kind of the polar modifier employed. After the conjugated diene and the monovinyl aromatic monomer are polymerized completely, the polymerization is terminated and the resulted polymer product is recovered in conventional ways.

More particularly, the multiblock interpolymer Y-B-I-B-Y of the present invention can be prepared as follows. Isoprene, in an amount to provide the desired composition of the final interpolymer, is charged to a non-polar hydrocarbon solvent in a reactor, optionally a polar modifier is charged depending upon the desired microstructure of polyisoprene, and the kind and amount of the polar modifier is dependent on the desired content of 3,4-addition polymerization structure in the polyisoprene block -I-. The monomer concentration is 10 to 20 percent by weight. After the initialization temperature, which is generally about 30 to 80 °C, is reached, a difunctional lithium based initiator is charged, in an amount to provide the desired molecular weight of the interpolymer, to prepare block -I-. The difunctional lithium based initiator can be a single difunctional lithium based initiator or a mixture of several difunctional lithium based initiators, and generally is at least one selected from the group consisting of bislithiums derived from dihalogenated alkanes and oligomeric bislithiums thereof, bislithiums of naphthalene, and bislithiums derived from diene compounds and oligomeric bislithiums thereof. After complete polymerization of the isoprene, butadiene in suitable amount is charged to prepare block -B-. After the butadiene is polymerized completely, a mixture of conjugated diene and monovinyl aromatic monomer containing a polar modifier is charged to the reactor to prepare block Y, the conjugated diene and the monovinyl aromatic monomer are used in such amounts to provide the desired weight ratio of the conjugated diene to the monovinyl aromatic monomer in block Y. The object of use of the polar modifier is to adjust the copolymerization reactivity ratio of the conjugated diene to the monovinyl aromatic monomer, achieve the random copolymerization of the conjugated diene and the monovinyl aromatic monomer, and obtain the random copolymer block Y. The polar modifier shall be used in an amount sufficiently to make the conjugated diene and the monovinyl aromatic monomer copolymerize randomly, and the amount of the polar modifier used can be varied within a wide range depending upon the kind of the polar modifier employed. After the conjugated diene and the monovinyl aromatic monomer are polymerized completely, the polymerization is terminated and the resulted polymer product is recovered in conventional ways.

More particularly, the multiblock interpolymer Y-I-BI-B-BI-I-Y of the present invention can be prepared as follows. Butadiene and isoprene, in amounts respectively to provide the desired composition of the final interpolymer, are simultaneously charged to a non-polar hydrocarbon solvent in a reactor, optionally a polar modifier is charged depending upon the desired microstructure of polybutadiene and polyisoprene, and the desired length of the tapered block BI, and the kind and amount of the polar modifier is dependent on the desired content of 1,2-addition polymerization structure in the polybutadiene block and of 3,4-addition polymerization structure in the polyisoprene block. The monomer concentration is 10 to 20 percent by weight. After the initialization temperature, which is generally about 30 to 80 °C, is reached, a difunctional lithium based initiator is charged, in an amount to provide the desired molecular weight of the interpolymer. The difunctional lithium based initiator can be a single difunctional lithium based initiator or a mixture of several difunctional lithium based initiators, and generally is at least one selected from the group consisting of bislithiums derived from dihalogenated alkanes and oligomeric bislithiums thereof, bislithiums of naphthalene, and bislithiums derived from diene compounds and oligomeric bislithiums thereof. After the butadiene and isoprene are polymerized completely, a mixture of conjugated diene and monovinyl aromatic monomer containing a polar modifier is charged to the reactor to prepare block Y, the conjugated diene and the monovinyl aromatic monomer are used in such amounts to provide the desired weight ratio of the conjugated diene to the monovinyl aromatic monomer in block Y. The object of use of the polar modifier is to adjust the copolymerization reactivity ratio of the conjugated diene to the monovinyl aromatic monomer, achieve the random copolymerization of the conjugated diene and the monovinyl aromatic monomer, and obtain the random copolymer block Y. The polar modifier shall be used in an amount sufficiently to make the conjugated diene and the monovinyl aromatic monomer copolymerize randomly, and the amount of the polar modifier used can be varied within a wide range depending upon the kind of the polar modifier employed. After the conjugated diene and the monovinyl aromatic monomer are polymerized completely, the polymerization is terminated and the resulted polymer product is recovered in conventional ways.

The polar modifier suitable for the present process is at least one from the group of consisting of oxygen-, nitrogen-, sulfur-, or phosphorus-containing polar compounds and metal alkoxides, the specific examples include (1) oxygen containing compounds such as diethyl ether, tetrahydrofuran, a compound represented by R¹OCH₂CH₂OR² (wherein R¹ and R², being the same or different, represent an alkyl having 1 to 6 carbon atoms, preferably R¹ is different from R², for example, glycol dimethyl ether, glycol diethyl ether), a compound represented by R¹OCH₂CH₂OCH₂CH₂OR² (wherein R¹ and R², being the same or different, represent an alkyl having 1 to 6 carbon atoms, preferably R¹ is different from R², for example, diglycol dimethyl ether, diglycol dibutyl ether), and crown ether; (2) nitrogen-containing compounds such as triethylamine, tetramethyl ethylene diamine (TMEDA), dipiperidino ethane (DPE), preferably TMEDA; (3) phosphorus-containing compounds such as hexamethyl phosphoric triamide (HMPA); (4) metal alkoxides represented by ROM, wherein R represents a alkyl having 1 to 6 carbon atoms, O represents oxygen atom, and M represents an metal cation such as sodium cation (Na⁺) and potassium cation (K⁺), preferably potassium tert-butoxide and sodium tert-amyloxide.

The solvent suitable for the present process includes non-polar hydrocarbon solvents, selected from the group consisting of non-polar aromatic hydrocarbons, non-polar aliphatic hydrocarbons and mixtures thereof. Examples of the solvent include benzene, toluene, ethylbenzene, xylene, pentane, hexane, heptane, octane, cyclohexane, mixed arene such as mixed xylene, mixed aliphatic hydrocarbon such as raffinate oil or mixtures thereof. The solvent is preferably hexane, cyclohexane and raffinate oil.

The initiator useful in the present invention is a difunctional lithium based initiator, selected from the group consisting of bislithiums derived from dihalogenated alkanes and oligomeric bislithiums thereof, having the general formulae LiRLi and Li(DO)ₙR(DO)ₙLi, respectively, wherein R represents an alkylene group having from 4 to 10 carbon atoms, DO represents a conjugated diene having from 4 to 8 carbon atoms or mixtures thereof, with 1, 3-butadiene and isoprene being preferred, and n represents the oligomerization degree, typically ranging from 2 to 8, preferably from 3 to 6, the bislithiums derived from dihalogenated alkanes and oligomeric bislithiums thereof are preferably 1,4-dilithiobutane, 1,2-dilithio-1,2-diphenylethane, 1,4-dilithio-1,1,4,4-tetraphenyl-butane, 1,4-dilithio-1,4-dimethyl-1,4-diphenyl-butane and isoprene oligomer- bislithiums and butadiene oligomer-bislithiums thereof, and any mixture thereof; bislithiums of naphthalene, such as dilithionaphthalene and α-methyl-dilithionaphthalene and mixture thereof; and bislithiums derived from diene compounds and oligomeric bislithiums thereof, for example, 1,3-phenylene -bis[3-methyl-1-(4-methyl)-phenylpentylidene]bislithium, 1,3-phenylene-bis[3-methyl-1-(4-methyl)phenyl-pentylidene]butadiene oligomer-bislithium, 1,3-phenylene-bis[3-methyl-1-(4-methyl)phenylpentylidene]isoprene oligomer-bislithium, 1,4-phenylene-bis[3-methyl-1-(4-methyl)phenylpentylidene]bislithium, 1,4-phenylene-bis[3-methyl-1-(4-methyl) phenyl pentylidene]butadiene oligomer-bislithium, and 1,4-phenylene-bis[3-methyl-1-(4-methyl)phenylpentylidene]isoprene oligomer-bislithium, and any mixture thereof.

The amount of the initiator used depends on the desired molecular weight of the multiblock interpolymers. In the present invention, the difunctional lithium based initiator is preferably used in such an amount that the multiblock interpolymers have a number average molecular weight of 5×10⁴ to 35×10⁴.

Optionally, conventional additives and fillers, such as antioxidant, can be added into the present multiblock interpolymers, for example Irganox 1010 (trade name, available from Ciba-Geigy AG, Switzerland) and ANTIGENE BHT (trade name, 2, 6-di-tertiary-butyl-4-methylphenol, available from Sumitomo Chemical Co., Ltd., Japan) and mixture thereof.

The present invention is further illustrated by the following examples, which shall not be construed as limited.

### Example 1

Into a 5 liter stainless steel reactor equipped with a stirrer and a heater are added 3.5 liters of cyclohexane and 140 grams of butadiene. The reactor is heated to 50°C and 24.6ml(0.095M of solution in toluene) of a difunctional lithium based initiator, 1,3-phenylene-bis[3-methyl-1-(4-methyl)phenyl pentylidene]bislithium is added thereto. The polymerization of the butadiene is completed after 30 minutes. Next, to the reaction mixture are added 175 grams of butadiene, 35 grams of styrene and the polar modifier TMEDA with the molar ratio of TMEDA/Li being 1.0, and the reaction is continued for 60 minutes. After the butadiene and styrene are polymerized completely, 3.5 grams of antioxidant (a mixture of Irganox 1010 and ANTIGENE BHT in a weight ratio of 1:1) is added, then the polymer product is recovered by conventional methods. The resultant polymer has a number average molecular weight of 15×10⁴. After being dried, the polymer samples are measured for their structural and mechanical properties by conventional methods and the results are shown in Table 1.

### Examples 2-7

The procedure similar to Example 1 is followed, except that the amounts of the butadiene and styrene, and the kind and amount of the polar modifier are changed, so as to prepare triblock interpolymers Y-B-Y. The polymerization conditions, the structures and properties obtained are shown in Table 1 as Examples 2-7.

**Table 1**

| Polymerization conditions and physical properties of the resulting products | | | | | | | |
|---|---|---|---|---|---|---|---|
| Example | 1 | 2 | 3 | 4 | 5 | 6 | 7 |
| S(g) | 35 | 105 | 105 | 35 | 70 | 70 | 70 |
| B1(g) | 140 | 105 | 70 | 105 | 70 | 140 | 105 |
| B2(g) | 175 | 140 | 175 | 210 | 210 | 140 | 175 |
| Ai | TMEDA | THF | THF | 2G | THF | THF | TMEDA |
| Ai/Li | 1.0 | 6 | 8 | 0.5 | 35 | 40 | 0.5 |
| 1,2-B% | 52 | 25 | 28 | 57 | 32 | 35 | 40 |
| Tg(°C) | -55 | -30 | -50 | -58 | -52 | -40 | -43 |
| Note: S is the amount of the styrene, B1 is the amount of the first charge of the butadiene, B2 is the amount of the second charge of the butadiene, Ai is the kind of the polar modifier, Ai/Li is the molar ratio of the polar modifier to the initiator, 1,2-B% is the weight percent of the 1,2-addition polymerization structure in block B, Tg is the glass transition temperature. THF is tetrahydrofuran, TEMDA is tetramethyl ethylene diamine, and 2G is diglycol dimethyl ether. | | | | | | | |

### Example 8

Into a 5 liter stainless steel reactor equipped with a stirrer and a heater are added 3.5 liters of cyclohexane and 140 grams of isoprene. The reactor is heated to 50°C and 24.6ml(0.095M of solution in toluene) of a difunctional lithium based initiator, 1,3-phenylene-bis[3-methyl-1-(4-methyl)phenyl pentylidene]bislithium is added thereto. The polymerization of the isoprene is completed after 30 minutes. Next, to the reaction mixture are added 175 grams of butadiene, 35 grams of styrene and the polar modifier TMEDA with the molar ratio of TMEDA/Li being 1.0, and the reaction is continued for 60 minutes. After the butadiene and styrene are polymerized completely, 3.5 grams of antioxidant (a mixture of Irganox 1010 and ANTIGENE BHT in a weight ratio of 1:1) is added, then the polymer product is recovered by conventional methods. The resultant polymer has a number average molecular weight of 15×10⁴. After being dried, the polymer samples are measured for their structural and mechanical properties by conventional methods and the results are shown in Table 2.

### Examples 9-14

The procedure similar to Example 8 is followed, except that the amounts of the isoprene, butadiene and styrene, and the kind and amount of the polar modifier are changed, so as to prepare triblock interpolymers Y-I-Y. The polymerization conditions, the structures and properties obtained are shown in Table 2 as Examples 9-14.

**Table 2**

| Polymerization conditions and physical properties of the resulting products | | | | | | | |
|---|---|---|---|---|---|---|---|
| Examples | 8 | 9 | 10 | 11 | 12 | 13 | 14 |
| S(g) | 35 | 105 | 105 | 35 | 70 | 70 | 70 |
| I(g) | 140 | 105 | 70 | 105 | 70 | 140 | 105 |
| B(g) | 175 | 140 | 175 | 210 | 210 | 140 | 175 |
| Ai | TMEDA | THF | THF | TMEDA | THF | THF | TMEDA |
| Ai/Li | 1.0 | 6 | 8 | 1.2 | 35 | 40 | 0.5 |
| 1,2-B% | 52 | 25 | 28 | 57 | 32 | 35 | 40 |
| 3,4-I% | 14 | 15 | 15 | 13 | 14 | 15 | 13 |
| Tg(°C) | -58 | -37 | -55 | -61 | -56 | -45 | -48 |
| Note: S is the amount of the styrene, B is the amount of the butadiene, Ai is the kind of the polar modifier, Ai/Li is the molar ratio of the polar modifier to the initiator, 1,2-B% is the weight percent of the 1,2-addition polymerization structure, 3,4-I% is the weight percent of the 3,4-addition polymerization structure in block I, Tg is the glass transition temperature. THF is tetrahydrofuran, and TEMDA is tetramethyl ethylene diamine. | | | | | | | |

### Example 15

Into a 5 liter stainless steel reactor equipped with a stirrer and a heater are added 3.5 liters of cyclohexane and 70 grams of butadiene. The reactor is heated to 50°C and 24.6ml(0.095M of solution in toluene) of a difunctional lithium based initiator, 1,3-phenylene-bis[3-methyl-1-(4-methyl)phenyl pentylidene]bislithium is added thereto. The polymerization of the butadiene is completed after 30 minutes. Then, 70 grams of isoprene is added, and the polymerization of the isoprene is completed after 30 minutes. Next, to the reaction mixture are added 175 grams of butadiene, 35 grams of styrene and the polar modifier TMEDA with the molar ratio of TMEDA/Li being 1.0, and the reaction is continued for 60 minutes. After the butadiene and styrene are polymerized completely, 3.5 grams of antioxidant (a mixture of Irganox 1010 and ANTIGENE BHT in a weight ratio of 1:1) is added, then the polymer product is recovered by conventional methods. The resultant polymer has a number average molecular weight of 15×10⁴. After being dried, the polymer samples are measured for their structural and mechanical properties by conventional methods and the results are shown in Table 3.

### Examples 16-21

The procedure similar to Example 15 is followed, except that the amounts of the butadiene, isoprene and styrene, and the kind and amount of the polar modifier are changed, so as to prepare pentablock interpolymers Y-I-B-I-Y. The polymerization conditions, the structures and properties obtained are shown in Table 3 as Examples 16-21.

**Table 3**

| Polymerization conditions and physical properties of the resulting products | | | | | | | |
|---|---|---|---|---|---|---|---|
| Examples | 15 | 16 | 17 | 18 | 19 | 20 | 21 |
| S(g) | 35 | 105 | 105 | 35 | 70 | 70 | 70 |
| I(g) | 70 | 45 | 35 | 65 | 30 | 70 | 35 |
| B1(g) | 70 | 60 | 35 | 40 | 40 | 70 | 70 |
| B2(g) | 175 | 140 | 175 | 210 | 210 | 140 | 175 |
| Ai | TMEDA | THF | THF | TMEDA | THF | THF | TMEDA |
| Ai/Li | 1.0 | 6 | 8 | 1.2 | 35 | 40 | 0.5 |
| 1,2-B% | 52 | 25 | 28 | 57 | 32 | 35 | 40 |
| 3,4-I% | 14 | 15 | 15 | 13 | 14 | 15 | 13 |
| Tg(°C) | -60 | -37 | -57 | -65 | -59 | -47 | -50 |
| Note: S is the amount of the styrene, I is the amount of the isoprene, B1 is the amount of the first charge of the butadiene, B2 is the amount of the second charge of the butadiene, Ai is the kind of the polar modifier, Ai/Li is the molar ratio of the polar modifier to the initiator, 1,2-B% is the weight percent of the 1,2-addition polymerization structure in block B, 3,4-1% is the weight percent of the 3,4-addition polymerization structure in block 1, Tg is the glass transition temperature. THF is tetrahydrofuran, and TEMDA is tetramethyl ethylene diamine. | | | | | | | |

### Example 22

Into a 5 liter stainless steel reactor equipped with a stirrer and a heater are added 3.5 liters of cyclohexane and 70 grams of isoprene. The reactor is heated to 50°C and 24.6ml(0.095M of solution in toluene) of a difunctional lithium based initiator, 1,3-phenylene-bis[3-methyl-1-(4-methyl)phenyl pentylidene]bislithium is added thereto. The polymerization of the isoprene is completed after 30 minutes. Then, 70 grams of butadiene is added, and the polymerization of the butadiene is completed after 30 minutes. Next, to the reaction mixture are added 175 grams of butadiene, 35 grams of styrene and the polar modifier TMEDA with the molar ratio of TMEDA/Li being 1.0, and the reaction is continued for 60 minutes. After the butadiene and styrene are polymerized completely, 3.5 grams of antioxidant (a mixture of Irganox 1010 and ANTIGENE BHT in a weight ratio of 1:1) is added, then the polymer product is recovered by conventional methods. The resultant polymer has a number average molecular weight of 15×10⁴. After being dried, the polymer samples are measured for their structural and mechanical properties by conventional methods and the results are shown in Table 4.

### Examples 23-28

The procedure similar to Example 22 is followed, except that the amounts of the butadiene, isoprene and styrene, and the kind and amount of the polar modifier are changed, so as to prepare pentablock interpolymers Y-B-I-B-Y. The polymerization conditions, the structures and properties obtained are shown in Table 4 as Examples 23-28.

**Table 4**

| Polymerization conditions and physical properties of the resulting products | | | | | | | |
|---|---|---|---|---|---|---|---|
| Examples | 22 | 23 | 24 | 25 | 26 | 27 | 28 |
| S(g) | 35 | 105 | 105 | 35 | 70 | 70 | 70 |
| I(g) | 70 | 45 | 35 | 65 | 30 | 70 | 35 |
| B1(g) | 70 | 60 | 35 | 40 | 40 | 70 | 70 |
| B2(g) | 175 | 140 | 175 | 210 | 210 | 140 | 175 |
| Ai | TMEDA | THF | THF | TMEDA | THF | THF | TMEDA |
| Ai/Li | 1.0 | 6 | 8 | 1.2 | 35 | 40 | 0.5 |
| 1,2-B% | 52 | 25 | 28 | 57 | 32 | 35 | 40 |
| 3,4-I% | 14 | 15 | 15 | 13 | 14 | 15 | 13 |
| Tg(°C) | -60 | -35 | -55 | -63 | -57 | -45 | -48 |
| Note: S is the amount of the styrene, I is the amount of the isoprene, B1 is the amount of the first charge of the butadiene, B2 is the amount of the second charge of the butadiene, Ai is the kind of the polar modifier, Ai/Li is the molar ratio of the polar modifier to the initiator, 1,2-B% is the weight percent of the 1,2-addition polymerization structure in block B, 3,4-I% is the weight percent of the 3,4-addition polymerization structure in block I, Tg is the glass transition temperature. THF is tetrahydrofuran, and TEMDA is tetramethyl ethylene diamine. | | | | | | | |

### Example 29

Into a 5 liter stainless steel reactor equipped with a stirrer and a heater are added 3.5 liters of cyclohexane and 70 grams of butadiene and 70 grams of isoprene. The reactor is heated to 50°C and 24.6ml(0.095M of solution in toluene) of a difunctional lithium based initiator, 1,3-phenylene-bis[3-methyl-1-(4-methyl)phenylpentylidene]bislithium is added thereto. The polymerization of the butadiene and isoprene is completed after 30 minutes. Next, to the reaction mixture are added 175 grams of butadiene, 35 grams of styrene and the polar modifier TMEDA with the molar ratio of TMEDA/Li being 1.0, and the reaction is continued for 60 minutes. After the butadiene and styrene are polymerized completely, 3.5 grams of antioxidant (a mixture of Irganox 1010 and ANTIGENE BHT in a weight ratio of 1:1) is added, then the polymer product is recovered by conventional methods. The resultant polymer has a number average molecular weight of 15×10⁴. After being dried, the polymer samples are measured for their structural and mechanical properties by conventional methods and the results are shown in Table 5.

### Examples 30-35

The procedure similar to Example 29 is followed, except that the amounts of the butadiene, isoprene and styrene, and the kind and amount of the polar modifier are changed, so as to prepare heptablock interpolymers Y-I-BI-B-BI-I-Y. The polymerization conditions, the structures and properties obtained are shown in Table 5 as Examples 30-35.

**Table 5**

| Polymerization conditions and physical properties of the resulting product | | | | | | | |
|---|---|---|---|---|---|---|---|
| Examples | 29 | 30 | 31 | 32 | 33 | 34 | 35 |
| S(g) | 35 | 105 | 105 | 35 | 70 | 70 | 70 |
| I(g) | 70 | 45 | 35 | 65 | 30 | 70 | 35 |
| B1(g) | 70 | 60 | 35 | 40 | 40 | 70 | 70 |
| B2(g) | 175 | 140 | 175 | 210 | 210 | 140 | 175 |
| Ai | TMEDA | THF | THF | TMEDA | THF | THF | TMEDA |
| Ai/Li | 1.0 | 6 | 8 | 1.2 | 35 | 40 | 0.5 |
| 1,2-B% | 52 | 25 | 28 | 57 | 32 | 35 | 40 |
| 3,4-I% | 14 | 15 | 15 | 13 | 14 | 15 | 13 |
| Tg(°C) | -59 | -34 | -54 | -62 | -56 | -44 | -47 |
| Note: S is the amount of the styrene, I is the amount of the isoprene, B1 is the amount of the first charge of the butadiene, B2 is the amount of the second charge of the butadiene, Ai is the kind of the polar modifier, Ai/Li is the molar ratio of the polar modifier to the initiator, 1,2-B% is the weight percent of the 1,2-addition polymerization structure, 3,4-I% is the weight percent of the 3,4-addition polymerization structure, Tg is the glass transition temperature. THF is tetrahydrofuran, and TEMDA is tetramethyl ethylene diamine. | | | | | | | |

## Claims

1. A multiblock interpolymer having the following symmetric structure:
Y-X-Y
wherein Y represents a block of a random copolymer of conjugated diene and monovinyl aromatic monomer, wherein the content of the 1,2- or 3,4-addition polymerization structure of the conjugated diene in block Y is from 10 to 50 percent by weight, based on the total weight of the units derived from the conjugated diene in block Y; and
X represents a block of butadiene homopolymer, a block of isoprene homopolymer, or a block of butadiene/isoprene copolymer, wherein the content of 3,4-addition polymerization structure of isoprene in block X is, based on the total weight of the units derived from the isoprene in block X, from 6 to 20 percent by weight, and/or the content of 1, 2-addition polymerization structure of butadiene in block X is, based on the total weight of the units derived from the butadiene in block X, from 6 to 20 percent by weight.

2. The multiblock interpolymer according to claim 1, wherein said multiblock interpolymer has a number average molecular weight of from 5x10⁴ to 35x10⁴, and the weight ratio of the total blocks Y to block X is from 10/90 to 90/10.

3. The multiblock interpolymer according to claim 1, wherein block Y is a block of a random copolymer of butadiene and styrene, the content of the styrene in block Y is from 10 to 50 percent by weight based on the total weight of block Y, and the content of the butadiene is from 50 to 90 percent by weight based on the total weight of block Y.

4. The multiblock interpolymer according to claim 1, wherein block X is a block selected from the group consisting of the following structures:
-B-
-I-
-I-B-I-
-B-I-B-
and
-I-BI-B-BI-I,
wherein B represents a block of butadiene homopolymer, I represents a block of isoprene homopolymer, and BI represents a block of tapered copolymer of butadiene and isoprene; and
when block X is -I-B-I-, -B-I-B- or -I-BI-B-BI-I-, the weight ratio of butadiene to isoprene is from 10/90 to 90/10.

5. A process for the preparation of a multiblock interpolymer according to claim 1, comprising the steps of:
a) anionic polymerizing butadiene and/or isoprene in a non-polar hydrocarbon solvent in presence of a difunctional lithium based initiator, till the butadiene and/or isoprene are polyrmerized completely, to form block X as defined in claim 1; and then
b) charging a mixture of conjugated diene and monovinyl aromatic monomer into the reaction mixture obtained in step a) above, continuing the anionic polymerization in presence of a polar modifier till the polymerization is complete, to form block Y as defined in claim 1.

6. The process according to claim 5, wherein step a) comprises
(1) anionic polymerizing butadiene in a non-polar hydrocarbon solvent in presence of a difunctional lithium based initiator, till the butadiene is polymerized completely, to form block B, a block of butadiene homopolymer; or
(2) anionic polymerizing isoprene in a non-polar hydrocarbon solvent in presence of a difunctional lithium based initiator, till the isoprene is polymerized completely, to form block I, a block of isoprene homopolymer; or
(3) anionic polymerizing butadiene in a non-polar hydrocarbon solvent in presence of a difunctional lithium based initiator, till the butadiene is polymerized completely, then adding isoprene and continuing the anionic polymerization till the isoprene is polymerized completely, to form block -I-B-I-; or
(4) anionic polymerizing isoprene in a non-polar hydrocarbon solvent in presence of a difunctional lithium based initiator, till the isoprene is polymerized completely, then adding butadiene and continuing the anionic polymerization till the butadiene is polymerized completely, to form block -B-I-B-; or
(5) anionic polymerizing a mixture of butadiene and isoprene in a non-polar hydrocarbon solvent in presence of a difunctional lithium based initiator, till the butadiene and isoprene are polymerized completely, to form block -I-BI-B-BI-I-.

7. The process according to claim 5, wherein said difunctional lithium based initiator is at least one selected from the group consisting of:
bislithiums derived from dihalogenated alkanes and oligomeric bislithiums thereof represented by the following general formulae:
LiRLi
and
Li(DO)ₙR(DO)ₙLi
wherein R represents an alkylene group having from 4 to 10 carbon atoms, DO represents a repeating unit derived from a conjugated diene having from 4 to 8 carbon atoms or mixtures thereof, n is a number of from 2 to 8;
bislithiums of naphthalene selected from the group consisting of dilithionaphthalene and α-methyl-dilithionaphthalene; and
bislithiums derived from diene compounds and oligomeric bislithiums thereof selected from the group consisting of 1,3-phenylene-bis(3-methyl-1-(4-methyl)phenyl-pentylidene) bislithium,1,3-phenylene-bis(3-methyl-1-(4-methyl)phenyl-pentylidene) butadiene oligomer-bislithium, 1,3-phenylene-bis(3-methyl-1-(4-methyl)phenylpentylidene)isoprene oligomer-bislithium, 1,4-phenylene-bis(3-methyl-1-(4-methyl)phenylpentylidene)bislithium, 1,4-phenylene-bis(3-methyl-1-(4-methyl)phenylpentylidene)butadiene oligomer-bislithium and 1,4-phenylene-bis (3-methyl-1-(4-methyl) phenylpentylidene) isoprene oligomer-bislithium.

8. The process according to claim 5, wherein said non-polar hydrocarbon solvent is selected from the group consisting of benzene, toluene, ethylbenzene, xylene, pentane, hexane, heptane, octane, cyclohexane, mixed xylene, raffinate oil and any mixture thereof.

9. The process according to claim 5, wherein said polar modifier is at least one selected from the group consisting of:
oxygen-containing compounds selected from the group consisting of diethyl ether, tetrahydrofuran, a compound represented by R¹OCH₂CH₂OR² and R¹OCH₂CH₂OCH₂CH₂OR²,
wherein R¹ and R², being the same or different, represent an alkyl having from 1 to 6 carbon atoms, and crown ether; nitrogen-containing compounds selected from the group consisting of triethylamine, tetramethyl ethylene diamine, and dipiperidino ethane;
phosphorus-containing compounds; and
metal alkoxides represented by ROM, wherein R represents an alkyl having from 1 to 6 carbon atoms, O represents an oxygen atom, and M represents a metal cation.

10. The multiblock interpolymer according to claim 1, wherein said multiblock interpolymer has a number average molecular weight of from 10x10⁴ to 25x10⁴, and the weight ratio of the total blocks Y to block X is from 30/70 to 70/30.

11. The multiblock interpolymer according to claim 1, wherein the content of the styrene in block Y is from 15 to 35 percent by weight based on the total weight of block Y, and the content of the butadiene is from 65 to 85 percent by weight based on the total weight of block Y.

12. The multiblock interpolymer according to claim 4, wherein block X is a block of butadiene/isoprene copolymer, and the weight ratio of butadiene to isoprene is from 30/70 to 70/30.

13. The multiblock interpolymer according to claim 1, wherein the content of 3,4-addition polymerization structure of isoprene in block X is, based on the total weight of the units derived from the isoprene in block X, from 10 to 20 percent by weight, and the content of 1,2-addition polymerization structure of butadiene in block X is, based on the total weight of the units derived from the butadiene in block X, from 10 to 20 percent by weight.

14. The process according to claim 8, wherein said non-polar hydrocarbon solvent is selected from the group consisting of hexane, cyclohexane and raffinate oil.

## Patentansprüche

1. Mehrfachblock-Interpolymer der folgenden symmetrischen Struktur:
Y-X-Y
worin Y für einen Block eines statistischen Copolymers von konjugiertem Dien und aromatischem Monovinylmonomer steht, wobei der Gehalt der 1,2- oder 3,4-Additionspolymerisationsstruktur des konjugierten Dien in Block Y 10 bis 50 Gew.-% beträgt, bezogen auf das Gesamtgewicht der von dem konjugierten Dien im Block Y abgeleiteten Einheiten; und
X für einen Block von Butadien-Homopolymer; einen Block von Isopren-Homopolymer oder einen Block von Butadien/Isopren-Copolymer steht, wobei der Gehalt der 3,4-Additionspolymerisationsstruktur von Isopren im Block X, bezogen auf das Gesamtgewicht der von dem Isopren im Block X abgeleiteten Einheiten, 6 bis 20 Gew.-% beträgt und/oder der Gehalt der 1,2-Additionspolymerisationsstruktur von Butadien im Block X, bezogen auf das Gesamtgewicht der von dem Butadien in Block X abgeleiteten Einheiten, 6 bis 20 Gew.-% beträgt.

2. Mehrfachblock-Interpolymer nach Anspruch 1, wobei das Mehrfachblock-Interpolymer ein zahlenmittleres Molekulargewicht von 5 x 10⁴ bis 35 x 10⁴ besitzt und das Gewichtsverhältnis der gesamten Blöcke Y zu Block X 10/90 bis 90/10 beträgt.

3. Mehrfachblock-Interpolymer nach Anspruch 1, wobei der Block Y ein Block eines statistischen Copolymers von Butadien und Styrol ist, der Gehalt des Styrols im Block Y 10 bis 50 Gew.-%, bezogen auf das Gesamtgewicht von Block Y, beträgt und der Gehalt des Butadien 50 bis 90 Gew.-%, bezogen auf das Gesamtgewicht von Block Y, beträgt.

4. Mehrfachblock-Interpolymer nach Anspruch 1, wobei Block X ein Block ist, gewählt aus der Gruppe bestehend aus den folgenden Strukturen:
-B-
-I-
-I-B-I-
-B-I-B-
und
-I-BI-B-BI-I;
worin B für einen Block von Butadien-Homopolymer steht, I für einen Block von Isopren-Homopolymer steht und BI für einen Block eines konischen Copolymers von Butadien und Isopren steht; und
wenn der Block X -I-B-I-, -B-I-B- oder -I-BI-B-BI-I- ist, das Gewichtsverhältnis von Butadien zu Isopren 10/90 bis 90/10 beträgt.

5. Verfahren für die Herstellung eines Mehrfachblock-Interpolymers nach Anspruch 1, umfassend die Schritte:
a) Anionisches Polymerisieren von Butadien und/oder Isopren in einem nicht-polaren Kohlenwasserstofflösungsmittel in Gegenwart eines difunktionellen Initiators auf Lithium-Basis, bis das Butadien und/oder Isopren vollständig polymerisiert sind, unter Bildung von Block X, wie in Anspruch 1 definiert; und anschließendes
b) Einspeisen einer Mischung von konjugiertem Dien und aromatischem Monovinylmonomer in die oben in Schritt a) erhaltene Reaktionsmischung, Fortführen der anionischen Polymerisation in Gegenwart eines polaren Modifizierungsmittels bis zur Vollendung der Polymerisation, unter Bildung von Block Y, wie in Anspruch 1 definiert.

6. Verfahren nach Anspruch 5, wobei der Schritt a) Folgendes umfasst:
(1) Anionisches Polymerisieren von Butadien in einem nicht-polaren Kohlenwasserstofflösungsmittel in Gegenwart eines difunktionellen Inititators auf Lithium-Basis, bis das Butadien vollständig polymerisiert ist, unter Bildung von Block B, eines Blocks von Butadien-Homopolymer; oder
(2) Anionisches Polymerisieren von Isopren in einem nicht-polaren Kohlenwasserstofflösungsmittel in Gegenwart eines difunktionellen Inititators auf Lithium-Basis, bis das Isopren vollständig polymerisiert ist, unter Bildung von Block I, eines Blocks von Isopren-Homopolymer; oder
(3) Anionisches Polymerisieren von Butadien in einem nicht-polaren Kohlenwasserstofflösungsmittel in Gegenwart eines difunktionellen Inititators auf Lithium-Basis, bis das Butadien vollständig polymerisiert ist, anschließendes Hinzufügen von Isopren und Fortsetzen der anionischen Polymerisation, bis das Isopren vollständig polymerisiert ist, unter Bildung von Block -I-B-I-; oder
(4) Anionisches Polymerisieren von Isopren in einem nicht-polaren Kohlenwasserstofflösungsmittel in Gegenwart eines difunktionellen Inititators auf Lithium-Basis, bis das Isopren vollständig polymerisiert ist, anschließendes Hinzufügen von Butadien und Fortsetzen der anionischen Polymerisation, bis das Butadien vollständig polymerisiert ist, unter Bildung von Block -B-I-B-; oder
(5) Anionisches Polymerisieren einer Mischung von Butadien und Isopren in einem nicht-polaren Kohlenwasserstofflösungsmittel in Gegenwart eines difunktionellen Inititators auf Lithium-Basis, bis das Butadien und Isopren vollständig polymerisiert sind, unter Bildung von Block -I-BI-B-BI-I-.

7. Verfahren nach Anspruch 5, wobei der difunktionelle Inititator auf Lithium-Basis mindestens einer ist, gewählt aus der Gruppe bestehend aus:
Bislithiumverbindungen, abgeleitet von dihalogenierten Alkanen und oligomeren Bislithiumverbindungen davon, angegeben durch die folgenden allgemeinen Formeln:
LiRLi
und
Li(DO)ₙR(DO)ₙLi
worin R für eine Alkylengruppe mit 4 bis 10 Kohlenstoffatomen steht, DO für eine Wiederholungseinheit, abgeleitet von einem konjugierten Dien mit 4 bis 8 Kohlenstoffatomen oder Mischungen davon steht, n eine Zahl von 2 bis 8 ist;
Bislithiumverbindungen von Naphthalin, gewählt aus der Gruppe bestehend aus Dilithionaphthalin und α-Methyl-dilithionaphthalin; und
Bislithiumverbindungen, abgeleitet von Dienverbindungen und oligomeren Bislithiumverbindungen davon, gewählt aus der Gruppe bestehend aus:
1,3-Phenylen-bis(3-methyl-1-(4-methyl)phenyl-pentyliden)-bislithium, 1,3-Phenylen-bis(3-methyl-1-(4-methyl)phenylpentyliden)butadien-oligomer-bislithium, 1,3-Phenylen-bis(3-methyl-1-(4-methyl)phenylpentyliden)isopren-oligomer-bislithium, 1,4-Phenylen-bis(3-methyl-1-(4-methyl)phenylpentyliden)-bislithium, 1,4-Phenylen-bis(3-methyl-1-(4-methyl)phenylpentyliden)butadien-oligomer-bislithium und 1,4-Phenylen-bis(3-methyl-1-(4-methyl)phenylpentyliden)-isopren-oligomer-bislithium.

8. Verfahren nach Anspruch 5, wobei das nicht-polare Kohlenwasserstofflösungsmittel gewählt ist aus der Gruppe bestehend aus Benzol, Toluol, Ethylbenzol, Xylol, Pentan, Hexan, Heptan, Octan, Cyclohexan, gemischtem Xyleol Raffinatöl und einer beliebigen Mischung davon.

9. Verfahren nach Anspruch 5, wobei das polare Modifizierungsmittel mindestens eines ist, gewählt aus der Gruppe bestehend aus:
sauerstoffhaltigen Verbindungen, gewählt aus der Gruppe bestehend aus Diethylether, Tetrahydrofuran, einer Verbindung, angegeben durch R¹OCH₂CH₂OR² und R¹OCH₂CH₂OCH₂CH₂OR²,
worin R¹ und R² gleich oder verschieden sind, ein Alkyl mit 1 bis 6 Kohlenstoffatomen bedeuten und eine Etherkrone bilden; stickstoffhaltigen Verbindungen, gewählt aus der Gruppe bestehend aus Triethylamin, Tetramethylethylendiamin und Dipiperidinoethan; phosphorhaltigen Verbindungen; und
Metallalkoxiden, angegeben durch ROM, worin R für ein Alkyl mit 1 bis 6 Kohlenstoffatomen steht, O für ein Sauerstoffatom steht und M für ein Metallkation steht.

10. Mehrfachblock-Interpolymer nach Anspruch 1, wobei das Mehrfachblock-Interpolymer ein zahlenmittleres Molekulargewicht von 10 x 10⁴ bis 25 x 10⁴ besitzt und das Gewichtsverhältnis der gesamten Blöcke Y zu Block X 30/70 bis 70/30 beträgt.

11. Mehrfachblock-Interpolymer nach Anspruch 1, wobei der Gehalt des Styrol im Block Y 15 bis 35 Gew.-%, bezogen auf das Gesamtgewicht von Block Y, beträgt und der Gehalt des Butadiens 65 bis 85 Gew.-%, bezogen auf das Gesamtgewicht von Block Y, beträgt.

12. Mehrfachblock-Interpolymer nach Anspruch 4, wobei der Block X ein Block von Butadien/Isopren-Copolymer ist und das Gewichtsverhältnis von Butadien zu Isopren 30/70 bis 70/30 beträgt.

13. Mehrfachblock-Interpolymer nach Anspruch 1, wobei der Gehalt an 3,4-Additionspolymerisationsstruktur von Isopren im Block X, bezogen auf das Gesamtgewicht der von dem Isopren im Block X abgeleiteten Einheiten, 10 bis 20 Gew.-% beträgt und der Gehalt an 1,2-Additionspolymerisationsstruktur von Butadien im Block X, bezogen auf das Gesamtgewicht der von dem Butadien im Block X abgeleiteten Einheiten, 10 bis 20 Gew.-% beträgt.

14. Verfahren nach Anspruch 8, wobei das nicht-polare Kohlenwasserstofflösungsmittel gewählt ist aus der Gruppe bestehend aus Hexan, Cyclohexan und Raffinatöl.

## Revendications

1. Interpolymère multiséquencé ayant la structure symétrique suivante:
Y-X-Y
dans laquelle Y représente une séquence d'un copolymère statistique d'un diène conjugué et d'un monomère aromatique monovinylique, dans lequel la teneur de la structure de polymérisation d'addition en positions 1,2 ou 3,4 du diène conjugué dans la séquence Y est comprise dans la plage allant de 10 à 50 % en poids, par rapport au poids total des unités dérivées du diène conjugué dans la séquence Y ; et
X représente une séquence d'un homopolymère de butadiène, une séquence d'un homopolymère d'isoprène, ou une séquence d'un copolymère de butadiène/isoprène, dans lequel la teneur de la structure de polymérisation d'addition en positions 3,4 de l'isoprène dans la séquence X est comprise dans la plage allant de 6 à 20 % en poids, par rapport au poids total des unités dérivées de l'isoprène dans la séquence X, et/ou la teneur de la structure de polymérisation d'addition en positions 1,2 du butadiène dans la séquence X est comprise dans la plage allant de 6 à 20 % en poids, par rapport au poids total des unités dérivées du butadiène dans la séquence X.

2. Interpolymère multiséquencé selon la revendication 1, dans lequel ledit interpolymère multiséquencé a un poids moléculaire moyen en nombre compris dans la plage allant de 5x0⁴ à 35x10⁴, et le rapport pondéral de toutes les séquences Y totales à la séquence X est compris dans la plage allant de 10/90 à 90/10.

3. Interpolymère multiséquencé selon la revendication 1, dans lequel la séquence Y est une séquence d'un copolymère statistique de butadiène et de styrène, la teneur du styrène dans la séquence Y est comprise dans la plage allant de 10 à 50 % en poids, par rapport au poids total de la séquence Y, et la teneur du butadiène est comprise dans la plage allant de 50 à 90 % en poids, par rapport au poids total de la séquence Y.

4. Interpolymère multiséquencé selon la revendication 1, dans lequel la séquence X est une séquence choisie dans le groupe constitué des structures suivantes :
-B-
-I-
-I-B-I-
-B-I-B-
et
-I-BI-B-BI-I,
dans lesquelles B représente une séquence d'un homopolymère de butadiène, I représente une séquence d'un homopolymère d'isoprène, et BI représente une séquence d'un copolymère conique de butadiène et d'isoprène ; et
dans lequel la séquence X est -I-B-I, -B-I-B-, ou I-BI-B-BI-I-, le rapport pondéral en poids du butadiène à l'isoprène est compris dans la plage allant de 10/90 à 90/10.

5. Procédé de préparation d'un interpolymère multiséquencé selon la revendication 1, comprenant les étapes consistant à :
a) polymériser de manière anionique le butadiène et/ou l'isoprène dans un solvant hydrocarboné non polaire en présence d'un initiateur à base de lithium difonctionnel, jusqu'à ce que le butadiène et/ou l'isoprène soient totalement polymérisés, pour former la séquence X comme défini dans la revendication 1 ; puis
b) charger un mélange d'un diène conjugué et d'un monomère aromatique monovinylique dans le mélange réactionnel obtenu dans l'étape a) ci-dessus, poursuivre la polymérisation anionique en présence d'un modificateur polaire jusqu'à ce que la polymérisation soit totale, pour former la séquence Y comme défini dans la revendication 1.

6. Procédé selon la revendication 5, dans lequel l'étape a) comprend
(1) la polymérisation anionique de butadiène dans un solvant hydrocarboné non polaire en présence d'un initiateur à base de lithium difonctionnel, jusqu'à ce que le butadiène soit totalement polymérisé, pour former la séquence B, une séquence d'un homopolymère de butadiène ; ou
(2) la polymérisation anionique d'isoprène dans un solvant hydrocarboné non polaire en présence d'un initiateur à base de lithium difonctionnel, jusqu'à ce que l'isoprène soit totalement polymérisé, pour former la séquence I, une séquence d'un homopolymère d'isoprène ; ou
(3) la polymérisation anionique de butadiène dans un solvant hydrocarboné non polaire en présence d'un initiateur à base de lithium difonctionnel, jusqu'à ce que le butadiène soit totalement polymérisé, puis l'ajout d'isoprène et la poursuite de la polymérisation anionique jusqu'à ce que l'isoprène soit totalement polymérisé, pour former la séquence -I-B-I- ; ou
(4) la polymérisation anionique d'isoprène dans un solvant hydrocarboné non polaire en présence d'un initiateur à base de lithium difonctionnel, jusqu'à ce que l'isoprène soit totalement polymérisé, puis l'ajout de butadiène et la poursuite de la polymérisation anionique jusqu'à ce que le butadiène soit totalement polymérisé, pour former la séquence -B-I-B- ; ou
(5) la polymérisation anionique d'un mélange de butadiène et d'isoprène dans un solvant hydrocarboné non polaire en présence d'un initiateur à base de lithium difonctionnel, jusqu'à ce que le butadiène et l'isoprène soient totalement polymérisés, pour former la séquence -I-BI-B-BI-I-.

7. Procédé selon la revendication 5, dans lequel l'initiateur à base de lithium difonctionnel est au moins un initiateur choisi dans le groupe constitué :
des bislithiums dérivés d'alcanes dihalogénés et des bislithiums oligomères de ceux-ci représentés par les formules générales suivantes :
LiRLi
et
Li (DO) ₙR (DO) ₙLi
dans lesquelles R représente un groupe alkylène ayant de 4 à 10 atomes de carbone, DO représente une unité répétitive dérivée d'un diène conjugué ayant de 4 à 8 atomes de carbone ou des mélanges de ceux-ci, n est un nombre de 2 à 8 :
des bislithiums de naphtalène choisis dans le groupe constitués du dilithionaphtalène et du α-méthyldithionaphtalène ; et
des bislithiums dérivés de composés diènes et des bislithiums oligomères de ceux-ci choisis dans le groupe constitué
du 1,3-phénylène-bis(3-méthyl-1-(4-méthyl)phénylpentylidène)bislithium,
d'un oligomère de 1,3-phénylène-bis(3-méthyl-1-(4-méthyl)phénylpentylidène)butadiène-bislithium,
d'un oligomère de 1,3-phénylène-bis(3-méthyl-1-(4-méthyl)phénylpentylidène)isoprène-bislithium,
du 1,4-phénylène-bis(3-méthyl-1-(4-méthyl)phénylpentylidène)bislithium,
d'un oligomère de 1,4-phénylène-bis(3-méthyl-1-(4-méthyl)phénylpentylidène)butadiène-bislithium, et
d'un oligomère de 1,4-phénylène-bis (3-méthyl-1-(4-méthyl) -phénylpentylidène)isoprène-bislithium.

8. Procédé selon la revendication 5, dans lequel ledit solvant hydrocarboné non polaire est choisi dans le groupe constitué du benzène, du toluène, de l'éthylbenzène, du xylène, du pentane, de l'hexane, de l'heptane, de l'octane, du cyclohexane, de mélanges de xylène, d'huile raffinée et de n'importe quel mélange de ceux-ci.

9. Procédé selon la revendication 5, dans lequel ledit modificateur polaire est au moins un modificateur choisi dans le groupe constitué :
de composés contenant un atome d'oxygène choisis dans le groupe constitué de l'éther diéthylique, du tétrahydrofurane, d'un composé représenté par les formules R¹OCH₂CH₂OR² et R¹OCH₂CH₂OCH₂CH₂OR², dans lesquelles R¹ et R², identiques ou différents, représentent un groupe alkyle ayant de 1 à 6 atomes de carbone, et d'un éther couronne ;
de composés contenant un atome d'azote choisis dans le groupe constitué de la triéthylamine, de la tétraméthyléthylènediamine, et du dipipéridinoéthane ;
de composés contenant un atome de phosphore ; et
d'alcoxydes de métal représentés par la formule ROM, dans laquelle R représente un groupe alkyle ayant de 1 à 6 atomes de carbone, O représente un atome d'oxygène, et M représente un cation métallique.

10. Interpolymère multiséquencé selon la revendication 1, dans lequel ledit interpolymère multiséquencé a un poids moléculaire moyen en nombre compris dans la plage allant de 10x10⁴ à 25x10⁴ , et le rapport en poids de toutes les séquences Y à la séquence X est compris dans la plage allant de 30/70 à 70/30.

11. Interpolymère multiséquencé selon la revendication 1, dans lequel la teneur du styrène dans la séquence Y est comprise dans la plage allant de 15 à 35 % en poids, par rapport au poids de la séquence Y, et la teneur du butadiène est comprise dans la plage allant de 65 à 85 % en poids, par rapport au poids total de la séquence Y.

12. Interpolymère multiséquencé selon la revendication 4, dans lequel la séquence X est une séquence d'un copolymère de butadiène/isoprène, et le rapport en poids de butadiène à l'isoprène est compris dans la plage allant de 30/70 à 70/30.

13. Interpolymère multiséquencé selon la revendication 1, dans lequel la teneur de la structure de polymérisation d'addition en positions 3,4 de l'isoprène dans la séquence X est comprise dans la plage allant de 10 à 20 % en poids, par rapport au poids total des unités dérivées de l'isoprène dans la séquence X, et la teneur de la structure de polymérisation d'addition en positions 1,2 du butadiène dans la séquence X est comprise dans la plage allant de 10 à 20 % en poids, par rapport au poids total des unités dérivées du butadiène dans la séquence X.

14. Procédé selon la revendication 8, dans lequel ledit solvant hydrocarboné non polaire est choisi dans le groupe constitué de l'hexane, du cyclohexane et d'une huile raffinée.
